# FASCICULE DE BREVET EUROPEEN

(11) **EP 3 665 708 B1**
(45) Date de publication et mention de la délivrance du brevet: **11.08.2021**
(21) Numéro de dépôt: 18800713.2
(22) Date de dépôt: 22.10.2018
(51) Int. Cl.: G21C 21/02, G21C 3/62, G21C 19/46, C01G 43/01, C01G 56/00

(54) **PROCÉDÉ DE PRÉPARATION D'UNE POUDRE A BASE D'OXYDE(S) D'URANIUM, D'AU MOINS UN ACTINIDE MINEUR ET ÉVENTUELLEMENT DE PLUTONIUM**
VERFAHREN ZUR HERSTELLUNG EINES PULVERS AUF DER BASIS VON URANOXID(EN), MINDESTENS EINES NEBENAKTINIDS UND GEGEBENENFALLS VON PLUTONIUM
METHOD FOR PREPARING A POWDER BASED ON OXIDE(S) OF URANIUM, OF AT LEAST ONE MINOR ACTINIDE AND OPTIONALLY OF PLUTONIUM

(30) Priorité: 23.10.2017 FR 1759998
(43) Date de publication de la demande: 17.06.2020
(73) Titulaire: Commissariat à l'Energie Atomique et aux Energies Alternatives, 75015 Paris (FR)
(72) Inventeur: DELAHAYE, Thibaud, 30330 Tresques (FR); LETURCQ, Gilles, 84850 Camaret (FR); LEBLANC, Martin, 34270 Sainte Croix De Quintillargues (FR)
(74) Mandataire: Brevalex
(86) Numéro de dépôt international: PCT/FR2018/052622
(87) Numéro de publication internationale: WO 2019/081841

(56) Documents cités:
- WO-A1-2013/026851
- WO-A1-2015/059188

## Description

### DOMAINE TECHNIQUE

L'invention a trait à un procédé de préparation d'une poudre à base d'oxyde(s) d'uranium, d'au moins un actinide mineur et éventuellement de plutonium.

Ce procédé peut trouver, en particulier, son application dans le recyclage d'actinides mineurs *via* l'incorporation de ces actinides mineurs dans un combustible nucléaire, lequel est destiné à être utilisé pour constituer des crayons nucléaires pour réacteur nucléaire (notamment du type à neutrons rapides) ou encore, à entrer dans la constitution de cibles de transmutation, en vue d'effectuer des expériences de transmutation nucléaire notamment pour mieux comprendre le mécanisme de transmutation de ces éléments actinides mineurs par captures neutroniques.

On précise, pour la suite de l'exposé, que par actinide mineur, on entend les éléments actinides autres que l'uranium, le plutonium et le thorium, formés dans les réacteurs par captures successives de neutrons par les noyaux de combustible standard, les actinides mineurs étant l'américium, le curium et le neptunium.

### ETAT DE LA TECHNIQUE ANTÉRIEURE

Après irradiation en réacteur, un combustible nucléaire usé contient des actinides valorisables dits majeurs (uranium et plutonium), des produits de fission ainsi que des actinides lourds, que sont les actinides mineurs.

A l'heure actuelle, le recyclage des actinides mineurs issus du traitement des combustibles usés est envisagé selon deux voies distinctes connues sous les appellations suivantes :
- le recyclage homogène ; et
- le recyclage hétérogène.

Dans le cas du recyclage homogène, les actinides mineurs sont mélangés directement à un combustible du type MOX de type (U,Pu)O₂ destiné à être utilisé dans un réacteur. Dès lors, seules de faibles quantités (par exemple, inférieures à 5% atomique) peuvent être ajoutées afin de ne pas perturber la neutronique du cœur de réacteur. Pour ce faire, lors du traitement du combustible usé, l'uranium, le plutonium et les actinides mineurs sont traités ensemble pour former des oxydes, lesquels sont ensuite utilisés dans la fabrication desdits combustibles.

L'introduction d'actinides mineurs dans des combustibles sous forme de pastilles destinés au cœur de réacteur se traduit par une émission importante, au sein de ces combustibles, de gaz de fission et d'hélium et par une forte émission α. Ceci peut être à l'origine au niveau structural d'une augmentation significative du volume des pastilles. Si cette augmentation n'est pas maîtrisée, ceci peut conduire à une réduction du jeu entre les pastilles et la gaine les entourant et à un risque d'interaction. Il faut donc prévoir des combustibles présentant une microstructure comportant un niveau de porosité stable sous irradiation, qui permet, qui plus est, l'évacuation des gaz de fission et de l'hélium de décroissance sans dégradation physique du combustible. Le taux de porosité recommandé pour de tels combustibles doit être de l'ordre de 10 à 20% volumique, de même que la porosité doit être une porosité majoritairement ouverte. Toutefois, ce type de procédé ne permettant de transmuter que de faibles quantités d'actinides mineurs et nécessitant d'intégrer des actinides mineurs dans les chaînes de production du MOX reste peu privilégié.

Dans le cas du recyclage hétérogène, les actinides mineurs sont séparés, lors du traitement du combustible usé, de l'uranium et du plutonium, et sont ensuite incorporés, à une teneur élevée, dans des éléments de combustible comprenant une matrice non fissile (par exemple, UO₂ appauvri) distincts des éléments de combustible standard du réacteur. Les éléments de combustible comprenant les actinides mineurs peuvent consister, par exemple, en des éléments de couverture disposés en périphérie du cœur d'un réacteur. En procédant de la sorte, le combustible de cœur et la neutronique ne sont que peu ou pas modifiés et il est alors possible de transmuter de plus grandes quantités d'actinides mineurs. Le matériau de ces éléments de combustible se présente généralement sous forme d'une solution solide de formule U₁₋ₓAMₓO_{2±δ} (avec 0,05 ≤ x ≤ 0,7 et 0 ≤ δ ≤ 0,2 et plus particulièrement, 0,07 ≤ x ≤ 0,2 et 0 ≤ δ ≤ 0,1), AM désignant un actinide mineur ou un mélange d'actinides mineurs et est fabriqué sur des lignes spécifiquement dédiées, ce qui n'a de ce fait pas de répercussion sur la fabrication du combustible MOX standard.

Cette voie de recyclage permet, notamment, d'éviter de dégrader les caractéristiques du combustible standard par une incorporation d'actinides mineurs en concentrant les problèmes générés par ces actinides sur un flux de matière réduit.

Que ce soit pour le recyclage homogène ou le recyclage hétérogène, les matériaux obtenus à partir des actinides mineurs doivent présenter, de préférence, une microstructure poreuse pour favoriser le relâchement des gaz de fission en cours d'irradiation et permettre ainsi le maintien de l'intégrité des matériaux comprenant des actinides mineurs.

Pour former ces matériaux poreux deux voies sont couramment envisagées.

La première voie est basée sur la métallurgie des poudres et fait intervenir des étapes de granulation par pressage à haute pression de poudres à base de U₃O₈ et de AmO₂, comme décrit dans Journal of Nuclear Materials, 432, 2013, 305-312. Ce procédé qui met en jeu plusieurs étapes de broyages d'oxydes simples d'uranium et d'américium ainsi qu'une étape de compaction est générateur de fines particules responsables de l'augmentation de la radioactivité des installations (telles que des boîtes à gants, des chaînes blindées) dans lesquelles sont manipulées ces poudres ainsi que du risque de contamination des travailleurs.

La deuxième voie est basée sur l'utilisation de précurseurs sphériques issus de l'emploi de résines échangeuses d'ions qui vont servir de matrices organiques support pour fixer la morphologie finale des précurseurs sous forme de microsphères poreuses de poudre agglomérée comme décrit dans Journal of Nuclear Materials, 453, 2014, 214-219. Dans cette voie, les étapes présentant un risque de dissémination sont très limitées. Cependant, l'inconvénient majeur de ce procédé réside dans la gestion de la grande quantité d'effluents liquides liés à l'étape de fixation des actinides sur la résine échangeuse d'ions. Hors, le rendement de fixation de ces actinides et notamment des actinides mineurs est inférieur à 60% conduisant à devoir gérer des solutions aqueuses susceptibles d'évoluer dans le temps sous radiations α avec le risque de générer des gaz explosifs, tels que H₂.

Aussi, au vu de ce qui existe, les auteurs de la présente invention se sont fixé pour but de mettre au point un procédé de préparation de précurseurs du type poudre pour la fabrication de combustibles à base d'oxyde(s) d'uranium, d'au moins un actinide mineur et éventuellement de plutonium qui présente notamment les caractéristiques suivantes :
- la possibilité d'accéder à un large panel de teneurs en actinides mineurs, ce qui permet d'envisager l'obtention, à partir de ces poudres, de matériaux utilisables tant pour le cœur de réacteur que pour les éléments de couverture ;
- des étapes non pénalisantes pour le rendement d'obtention des précurseurs du type poudre ;
- un nombre d'étapes plus limité que pour les procédés mis en œuvre classiquement ;
- des étapes permettant d'éviter une gestion importante d'effluents chargés en actinides mineurs ;
- un procédé robuste qui permet une grande flexibilité en termes d'entrants et également de produits finaux obtenus.

### EXPOSÉ DE L'INVENTION

Ainsi, l'invention a trait à un procédé de préparation d'une poudre à base d'oxyde(s) comprenant de l'uranium, au moins un actinide mineur et éventuellement du plutonium comprenant les étapes suivantes :
a) une étape d'ajout d'au moins un monomère à une solution aqueuse comprenant des ions nitrates et comprenant de l'uranium, au moins un actinide mineur et éventuellement du plutonium, le ou les monomères comprenant, avantageusement, au moins un groupe éthylénique et au moins un groupe polaire apte à former des liaisons hydrogène ;
b) une étape d'obtention d'un gel piégeant ladite solution aqueuse par polymérisation du ou des monomères ajoutés en a) ;
c) une étape d'obtention d'un xérogel comprenant des nitrates d'uranium, d'au moins un actinide mineur et éventuellement de plutonium par déshydratation du gel obtenu en b) ;
d) une étape d'obtention de ladite poudre par traitement thermique du xérogel obtenu en c).

Avant d'entrer plus en détail dans la description de cette invention, nous précisons les définitions suivantes.

Par monomère, on entend, classiquement, dans ce qui précède et ce qui suit, un composé apte à réagir au cours d'une réaction de polymérisation pour former un polymère (qui sera, dans le cadre de cette invention, le matériau constitutif du gel, qui piège la solution aqueuse), le polymère comprenant ainsi un motif répétitif, c'est-à-dire un groupe organique bivalent issu directement de la réaction du monomère.

Par gel, on entend, classiquement, dans ce qui précède et ce qui suit, un matériau constitué du ou des polymères issu(s) de la polymérisation du ou des monomères susmentionnés, dans lequel est retenu un solvant, ici une phase aqueuse, qui correspond, dans notre cas, à la solution aqueuse comprenant des ions nitrates et comprenant de l'uranium, au moins un actinide mineur et éventuellement du plutonium.

Par xérogel, on entend, classiquement dans ce qui précède et ce qui suit, un matériau constitué du ou des polymères issu(s) de la polymérisation du ou des monomères susmentionnés, dans lequel l'eau de la solution aqueuse a été éliminée par séchage ne laissant ainsi subsister plus que des nitrates d'uranium, d'au moins un actinide mineur et éventuellement de plutonium.

Le procédé de l'invention comprend, en premier lieu, une étape d'ajout d'au moins un monomère à une solution aqueuse comprenant des ions nitrates et comprenant de l'uranium, au moins un actinide mineur et éventuellement du plutonium.

Plus précisément, la solution aqueuse comprenant des ions nitrates et comprenant de l'uranium, au moins un actinide mineur et, éventuellement, du plutonium est, avantageusement, une solution aqueuse comprenant de l'uranium à son degré d'oxydation VI (pouvant être symbolisé par U^{+VI}), au moins un actinide mineur à son degré d'oxydation III, tel que de l'américium à son degré d'oxydation III (pouvant être symbolisé par Am^{+III}) et éventuellement du plutonium à son degré d'oxydation IV (pouvant être symbolisé par Pu^{+IV}). Plus spécifiquement, la solution aqueuse peut consister en une solution aqueuse comprenant du U^{+VI}, par exemple, sous forme de nitrate d'uranyle UO₂(NO₃)₂, de l'américium Am^{+III}, par exemple, sous forme de nitrate d'américium Am(NO₃)₃, et éventuellement du Pu^{+IV}, par exemple, sous forme de nitrate de plutonium (IV) Pu(NO₃)₄. En outre, la solution aqueuse peut être une solution nitrique (c'est-à-dire une solution d'acide nitrique).

Cette solution nitrique peut être issue directement du retraitement d'un combustible usé comprenant les opérations suivantes :
- une opération de dissolution du combustible usé dans de l'acide nitrique ;
- une opération d'extraction de l'uranium et du plutonium au moyen d'une phase organique comprenant du kérosène et du tributylphosphate (connu sous l'abréviation TBP) ;
- une opération d'extraction d'au moins un actinide mineur, tel que l'américium, de la phase nitrique restante, par exemple, par mise en œuvre du procédé ExAm, la phase organique comprenant de l'américium constituant une solution mère purifiée en américium +III ;
- une étape d'obtention de la solution nitrique comprenant de l'uranium, au moins un actinide mineur, tel que l'américium +III, et éventuellement du plutonium par ajout à la solution mère mentionnée ci-dessus de la quantité souhaitée d'uranium et éventuellement de plutonium en fonction de la teneur finale visée pour la poudre.

Avantageusement, le ou les monomères ajoutés au cours de l'étape a) comprennent au moins un groupe éthylénique (constituant le groupe de polymérisation) et au moins un groupe polaire apte à former des liaisons hydrogène. Ainsi, une fois polymérisé(s), le produit résultant (à savoir un polymère) sera apte à emmagasiner de l'eau par formation de liaisons hydrogène entre celle-ci et le ou les groupes polaires du ou des motifs répétitifs issus de la polymérisation du ou des monomères.

De manière plus spécifique, le ou les monomères ajoutés au cours de l'étape a), comprennent au moins un groupe éthylénique et au moins un groupe comportant un ou plusieurs atomes d'hydrogène liés à des atomes plus électronégatifs que l'hydrogène, tels que des atomes d'azote, des atomes d'oxygène.

Encore plus spécifiquement, le ou les monomères comprennent au moins un groupe éthylénique et au moins un groupe choisi parmi les groupes amides, les groupes -OH, les groupes carboxyliques, les groupes carboxylates et/ou les groupes esters.

A titre d'exemples, le ou les monomères peuvent être choisis parmi les monomères acryliques, tels que l'acide acrylique, les monomères méthacryliques, les monomères acrylates (et plus particulièrement, les monomères acrylates d'alkyle), les monomères méthacrylates (et plus particulièrement, les monomères méthacrylates d'alkyle), les monomères acrylamides, les monomères *bis*(acrylamides), les monomères époxydes et les mélanges de ceux-ci.

Au cours de l'étape a), il peut être ajouté un seul monomère ou un mélange de monomères, par exemple, des types de ceux mentionnés ci-dessus.

Lorsqu'il s'agit d'un mélange de monomères, celui-ci peut consister, plus précisément en un monomère comprenant un seul groupe polymérisable, par exemple, un monomère acrylique, tel que l'acide acrylique et un monomère comprenant deux groupes polymérisables, par exemple un monomère *bis*(acrylamide), ce dernier du fait de la présence de deux groupes polymérisables assurant également le rôle d'agent de réticulation. A titre indicatif, le mélange de monomères peut consister en de l'acide acrylique et en du N,N'-méthylène-*bis*(acrylamide).

Hormis les caractéristiques mentionnées ci-dessus, qui peuvent dicter le choix du ou des monomères en fonction de la polymérisation souhaitée (par exemple, une polymérisation radicalaire ou une polymérisation par étapes comme la polycondensation), d'autres critères peuvent présider au choix du ou des monomères à ajouter lors de l'étape a) pour former ultérieurement un gel.

Parmi ces critères, la notion de stabilité du ou des monomères vis-à-vis de la solution aqueuse et éventuellement du phénomène de radiolyse α induit par la présence éventuelle de certains radioéléments émetteurs α peut être un critère de choix pour le ou les monomères. En effet, il importe d'éviter une gélification prématurée ou voire une non-gélification de la solution aqueuse mais aussi la génération de gaz présentant des risques d'explosivité (H₂, CH₄, etc.) au-delà de certaines concentrations. De plus, en cas d'arrêt de la mise en œuvre du procédé en conditions accidentelles ou programmées, il faut pouvoir également éviter un vieillissement du gel par radiolyse qui pourrait empêcher la reprise de la production ou générer là encore des gaz présentant des risques d'explosivité.

En outre, dans le choix du ou des monomères à ajouter lors de l'étape a) peuvent présider les critères suivants :
- les propriétés physico-chimiques du produit final recherché, à savoir la poudre, en termes, par exemple, de morphologie, de microstructure, de taux d'agglomération ;
- la viscosité souhaitée pour le gel issu de la polymérisation du ou des monomères, la notion de viscosité pouvant être un critère de choix en fonction de la nature du procédé mis en œuvre ; par exemple, un procédé continu faisant intervenir des filières d'écoulement s'accommode aisément avec une viscosité faible du gel obtenu ;
- le respect de la réglementation Reach concernant la toxicité du ou des monomères utilisés et l'absence de génération de gaz lors de la dégradation thermique des polymères issus de la polymérisation du ou des monomères ;
- l'aptitude des polymères issus de la polymérisation du ou des monomères à être dégradés thermiquement lors de l'étape de traitement thermique sans laisser d'impuretés résiduelles dans la poudre finale, dont les teneurs pourraient être rédhibitoires pour les traitements ultérieurs de la poudre sous forme de pastilles (notamment les étapes de mise en forme/frittage/densification) et l'utilisation de ces pastilles comme combustibles ;
- leur disponibilité et leur coût.

Dans certains cas, le ou les monomères ajoutés lors de l'étape a) peuvent également remplir le rôle d'agent complexant de l'uranium et/ou d'au moins un actinide mineur et éventuellement du plutonium présents dans ladite solution, sous réserve, bien entendu, que le ou les monomères comprennent des groupes aptes à complexer l'uranium et/ou au moins un actinide mineur et éventuellement du plutonium.

Par ailleurs, il peut être ajouté à la solution aqueuse, de préférence, avant l'ajout du ou des monomères, au moins un agent complexant de l'uranium et/ou du ou des actinides mineurs et éventuellement du plutonium présents dans ladite solution, le ou lesdits agents complexant étant distincts du ou des monomères de l'étape a), le rôle de cet agent pouvant être, à part la complexation, d'éviter un phénomène de précipitation de l'uranium et/ou du ou des actinides mineurs et éventuellement du plutonium avant la mise en œuvre de l'étape de gélification.

On précise que, par agent complexant, on entend un composé comprenant au moins un groupe fonctionnel apte à complexer l'uranium et/ou le ou les actinides mineurs et éventuellement le plutonium présent dans la solution aqueuse, ce qui signifie, en d'autres termes, que l'uranium et/ou le ou les actinides mineurs et éventuellement le plutonium, au contact de cet agent, sont aptes à se lier au groupe fonctionnel susmentionné en formant une liaison de coordination moyennant le partage d'un doublet libre d'un hétéroatome présent au niveau de ce groupe et/ou d'une charge négative portée par un hétéroatome présent au niveau de ce groupe avec une orbitale vide de l'uranium et/ou du ou des actinides mineurs et éventuellement du plutonium.

Ledit hétéroatome porteur d'un doublet libre peut être un atome d'oxygène, un atome d'azote ou un atome de soufre et des combinaisons de ceux-ci, des groupes fonctionnels comprenant de tels hétéroatomes pouvant être un groupe alcool (à savoir, un groupe -OH), un groupe amine, un groupe éther, un groupe ester (à savoir, un groupe -COO-), un groupe carboxylique ou un groupe carboxylate.

A titre d'exemples d'agents complexants, il peut être cité :
- un composé comprenant au moins un groupe carboxylique, tel que l'acide citrique ;
- un composé comprenant au moins un groupe amine, tel que l'urée ;
- un composé comprenant au moins un groupe amine et au moins un groupe carboxylique, tel que l'EDTA (abréviation désignant le composé acide éthylènediaminetétraacétique) ou le DTPA (abréviation désignant le composé acide diéthylènetriaminepentaacétique).

Après l'ajout du ou des monomères et éventuellement du ou des agents complexants, le procédé de l'invention comprend une étape de gélification de la solution issue de l'étape a) par polymérisation du ou des monomères ajoutés lors de cette étape, moyennant quoi il se forme un gel piégeant la solution aqueuse comprenant l'uranium, le ou les actinides mineurs et éventuellement le plutonium sous forme complexée ou non (selon que le ou les monomères comprennent au moins un groupe complexant et/ou qu'il a été procédé préalablement à l'ajout d'un agent complexant).

Pour engendrer la polymérisation du ou des monomères ajoutés en a), plusieurs voies peuvent être envisagées :
- une voie thermique consistant à chauffer la solution pour amorcer la polymérisation et, par voie de conséquence, la gélification (l'étape pouvant être ainsi qualifiée de thermo-gélification) ;
- une voie consistant à soumettre la solution à un rayonnement UV pour également amorcer la polymérisation ;
- une voie consistant à soumettre la solution à un rayonnement y pour également amorcer la polymérisation ;
- une voie consistant à ajouter à la solution un initiateur de polymérisation tel que, par exemple, de l'eau oxygénée ou un mélange eau oxygénée/acide ascorbique.

Il n'est pas exclu qu'une combinaison de ces différentes voies puisse être utilisée, telle que la voie thermique associée à la voie consistant à ajouter à la solution un initiateur de polymérisation.

Une fois le gel obtenu, il est soumis à une étape de déshydratation, moyennant quoi il se forme un xérogel (à savoir, un matériau poreux sec dont le squelette est formé des polymères formés à l'étape précédente) et, de manière concomitante, une précipitation des nitrates d'uranium, du ou des actinides mineurs et éventuellement de plutonium au sein du xérogel ainsi formé.

Cette étape de déshydratation peut être mise en œuvre en plaçant le gel dans une étuve ou encore dans un four à microondes.

Enfin, le xérogel est soumis à une étape de traitement thermique du xérogel obtenu en c) pour obtenir la poudre objet du procédé de l'invention.

Cette étape de traitement thermique peut consister en une opération de calcination sous atmosphère oxydante, au cours de laquelle le matériau organique du xérogel est dégradé thermiquement (l'opération pouvant être ainsi qualifiée en partie de déliantage) et les nitrates d'uranium, du ou des actinides mineurs et éventuellement de plutonium sont convertis en oxyde(s) d'uranium, d'au moins un actinide mineur et éventuellement de plutonium. Les choix de la température et de la durée de calcination sont fixés en fonction de la nature du xérogel et des propriétés physico-chimiques souhaitées pour l'oxyde ou le mélange d'oxydes final. La température de calcination est typiquement comprise entre 400 et 1400°C et, plus particulièrement, entre 500 et 1200°C. Cette opération conduit principalement au relâchement gazeux de CO₂, CO, H₂O voire de CH₄ par dégradation thermique du matériau constitutif du xérogel mais en fonction de la nature de l'atmosphère de calcination, différents gaz en différentes quantités peuvent être générés. Quant aux nitrates, ils sont convertis thermiquement en oxydes et en fonction de leur nature peuvent interagir pour former des solutions solides partielles ou totales. Ainsi, dans le cas de l'uranium et de l'américium, il est possible de former sous atmosphère oxydante un oxyde à base de U₃O₈ partiellement substitué avec de l'américium associé à un oxyde d'américium de type AmO₂ et/ou Am₂O₃ en fonction de la composition de la solution aqueuse de départ et des conditions de calcination.

Après l'opération de calcination sous atmosphère oxydante mentionnée ci-dessus, il peut être effectué une opération de traitement thermique additionnel pouvant consister à réduire au moins une partie de la poudre obtenue préalablement en une solution solide oxyde comprenant de l'uranium, au moins un actinide mineur, tel que l'américium et éventuellement du plutonium (par exemple, une solution solide de formule U₁₋ₓAMₓO_{2±δ} avec 0,05 ≤ x ≤ 0,7 et 0 ≤ δ ≤ 0,2 et plus particulièrement, 0,07 ≤ x ≤ 0,2 et 0 ≤ δ ≤ 0,1 et AM désignant un actinide mineur ou un mélange de ceux-ci). Pour ce faire, au moins une partie de la poudre obtenue préalablement est isolée et soumise à cette opération de calcination réductrice puis, une fois réduite, est réintroduite dans la poudre obtenue à l'issue de l'opération de calcination sous atmosphère oxydante, moyennant quoi il résulte un mélange secondaire utilisable pour la fabrication de pastilles de combustible.

L'étape de traitement thermique d) peut être précédée d'une étape de broyage du xérogel obtenu de sorte à le transformer en poudre, l'étape de traitement thermique se déroulant ainsi sur la poudre issue de l'étape de broyage.

La poudre obtenue à l'issue du procédé de l'invention est une poudre à base d'oxyde(s) d'uranium, d'au moins un actinide mineur et éventuellement de plutonium, ce qui signifie qu'elle peut comporter :
- un mélange d'oxyde d'uranium (par exemple, U₃O₈), d'au moins un oxyde d'actinide mineur (tel que AmO₂, Am₂O₃) et éventuellement d'au moins un oxyde de plutonium ; et/ou
- une solution solide d'oxyde d'uranium, d'au moins un actinide mineur et éventuellement de plutonium, par exemple, une solution de de formule U₁₋ₓAM_{X}O_{2±δ} avec 0,05 ≤ x ≤ 0,7 et 0 ≤ δ ≤ 0,2 et plus particulièrement, 0,07 ≤ x ≤ 0,2 et 0 ≤ δ ≤ 0,1, AM désignant au moins un actinide mineur, tel que l'américium ; et
- des combinaisons de ceux-ci.

Il n'est pas exclu que, dans le mélange susmentionné, une partie de l'uranium de l'oxyde d'uranium soit substitué par un actinide mineur, tel que l'américium et vice versa.

En particulier, la poudre obtenue selon le procédé de l'invention est une poudre à base d'oxyde(s) d'uranium et d'américium, ce qui signifie qu'elle peut comporter :
- un mélange d'oxyde d'uranium U₃O₈ et d'oxyde d'américium Am₂O₃; et/ou
- une solution solide d'oxyde d'uranium et d'américium de formule U₁₋ₓAM_{X}O_{2±δ} avec 0,05 ≤ x ≤ 0,7 et 0 ≤ δ ≤ 0,2 et plus particulièrement, 0,07 ≤ x ≤ 0,2 et 0 ≤ δ ≤ 0,1 ; et
- des combinaisons de ceux-ci.

La poudre obtenue conformément au procédé de l'invention est une composition très active, particulièrement adaptée à l'obtention d'un combustible nucléaire.

Ainsi l'invention a trait également à un procédé de préparation d'un combustible compacté, par exemple sous forme de pastilles, comprenant :
e) une étape de mise en œuvre du procédé de préparation tel que défini ci-dessus ;
f) une étape de compactage de ladite poudre obtenue en e).

Ainsi, la poudre obtenue selon le procédé de l'invention peut être utilisée telle quelle mais il n'est pas exclu, qu'avant l'étape de compactage, elle soit amenée à subir des opérations de traitement préalables, telles qu'une opération de broyage, de granulation, d'atomisation voire de dilution (par exemple, en la mélangeant avec une poudre d'oxyde d'uranium)

L'étape de compactage peut être réalisée au moyen d'une presse, qui va appliquer une pression à la composition placée dans un moule, dont la forme correspond à la forme que l'on souhaite affecter au combustible, cette forme étant classiquement celle d'une pastille cylindrique ou annulaire.

D'autres caractéristiques et avantages de l'invention apparaîtront du complément de description qui suit qui se rapporte à un exemple de préparation d'une poudre conforme à l'invention.

Bien entendu, ce complément de description n'est donné qu'à titre d'illustration de l'invention et n'en constitue en aucun cas une limitation.

### EXPOSÉ DÉTAILLÉ DE MODES DE RÉALISATION PARTICULIERS

### EXEMPLE 1

Dans cet exemple, il est préparé, en premier lieu, un mélange de U₃O₈ et de Am₂O₃. Pour ce faire, il est dissous, sous agitation, 204 mg de poudre de U_{0,9}Am_{0,1}O₂ dans 17 mL d'acide nitrique (HNO₃) 0,5 M. Une fois la poudre totalement dissoute, 188,8 mg d'urée sont ajoutés sous agitation. Par la suite, 5 mL d'acide acrylique et 500 mg de N,N'-méthylène-*bis*(acrylamide) sont mélangés et introduits. La solution obtenue est chauffée jusqu'à ébullition. Une fois que l'ébullition est atteinte, une goutte d'eau oxygénée est ajoutée conduisant à la formation instantanée d'un gel. L'agitateur est retiré et le gel est chauffé sur une plaque chauffante. Au bout de 45 minutes, un xérogel est obtenu. Le xérogel est broyé puis calciné sous air à 800°C pendant 2 heures. Une analyse par diffraction aux rayons X sur le composé synthétisé après traitement thermique témoigne de la présence de deux phases : une phase très majoritaire de type U₃O₈ substituée par de l'américium et une phase très minoritaire de type Am₂O₃.

Une partie de la poudre obtenue est conservée et servira de porogène par la suite. Le reste de la poudre est calciné à 850°C pendant 1 heure sous atmosphère réductrice (Ar/H₂ 4%). L'analysée par diffractions aux rayons X sur poudre du composé après traitement thermique témoigne de la présence d'une seule phase de type U_{0,9}Am_{0,1}O₂.

Les deux poudres obtenues sont ensuite mélangées afin d'être utilisées comme précurseur pour la fabrication de pastilles poreuses de U_{0,9}Am_{0,1}O₂.

## Revendications

1. Procédé de préparation d'une poudre à base d'oxyde(s) comprenant de l'uranium, au moins un actinide mineur et éventuellement du plutonium comprenant les étapes suivantes :
a) une étape d'ajout d'au moins un monomère à une solution aqueuse comprenant des ions nitrates et comprenant de l'uranium, au moins un actinide mineur et éventuellement du plutonium, le ou les monomères comprenant au moins un groupe éthylénique et au moins un groupe polaire apte à former des liaisons hydrogène ;
b) une étape d'obtention d'un gel piégeant ladite solution aqueuse par polymérisation du ou des monomères ajoutés en a) ;
c) une étape d'obtention d'un xérogel comprenant des nitrates d'uranium, d'au moins un actinide mineur et éventuellement de plutonium par déshydratation du gel obtenu en b) ;
d) une étape d'obtention de ladite poudre par traitement thermique du xérogel obtenu en c).

2. Procédé selon la revendication 1, dans lequel la solution aqueuse est une solution aqueuse comprenant de l'uranium à son degré d'oxydation VI, au moins un actinide mineur à son degré d'oxydation III et éventuellement du plutonium à son degré d'oxydation IV.

3. Procédé selon la revendication 1 ou 2, dans lequel la solution aqueuse est une solution aqueuse comprenant du U^{+VI} sous forme de nitrate d'uranyle UO₂(NO₃)₂, de l'américium Am^{+III} sous forme de nitrate d'américium Am(NO₃)₃ et éventuellement du Pu^{+IV} sous forme de nitrate de plutonium (IV) Pu(NO₃)₄.

4. Procédé selon l'une quelconque des revendications précédentes, dans lequel le ou les monomères ajoutés au cours de l'étape a) comprennent au moins un groupe éthylénique et au moins un groupe comportant un ou plusieurs atomes d'hydrogène liés à des atomes plus électronégatifs que l'hydrogène, tels que des atomes d'azote, des atomes d'oxygène.

5. Procédé selon l'une quelconque des revendications précédentes, dans lequel le ou les monomères ajoutés au cours de l'étape a) comprennent au moins un groupe éthylénique et au moins un groupe choisi parmi les groupes amides, les groupes -OH, les groupes carboxyliques et/ou les groupes carboxylates et/ou les groupes esters.

6. Procédé selon l'une quelconque des revendications précédentes, dans lequel le ou les monomères ajoutés au cours de l'étape a) sont choisis parmi les monomères acryliques, les monomères méthacryliques, les monomères acrylates, les monomères méthacrylates, les monomères acrylamides, les monomères bis(acrylamides), les monomères époxydes et les mélanges de ceux-ci.

7. Procédé selon l'une quelconque des revendications précédentes, dans lequel l'ajout de l'étape a) consiste en un ajout d'un mélange de monomères.

8. Procédé selon la revendication 8, dans lequel le mélange de monomères consiste en un monomère comprenant un seul groupe polymérisable, par exemple, un monomère acrylique, tel que l'acide acrylique et un monomère comprenant deux groupes polymérisables, par exemple un monomère *bis*(acrylamide).

9. Procédé selon l'une quelconque des revendications précédentes, dans lequel il est ajouté à la solution aqueuse au moins un agent complexant de l'uranium et/ou du ou des actinides mineurs et éventuellement du plutonium présents dans ladite solution, le ou lesdits agents complexant étant distincts du ou des monomères de l'étape a).

10. Procédé selon la revendication 9, dans lequel le ou les agents complexants sont choisis parmi les composés comprenant au moins un groupe carboxylique, les composés comprenant au moins un groupe amine, les composés comprenant au moins un groupe amine et au moins un groupe carboxylique.

11. Procédé selon l'une quelconque des revendications précédentes, dans lequel la polymérisation de l'étape b) est engendrée par les voies suivantes :
- une voie thermique consistant à chauffer la solution pour amorcer la polymérisation et, par voie de conséquence, la gélification ;
- une voie consistant à soumettre la solution à un rayonnement UV pour également amorcer la polymérisation ;
- une voie consistant à soumettre la solution à un rayonnement y pour également amorcer la polymérisation ;
- une voie consistant à ajouter à la solution un initiateur de polymérisation tel que, par exemple, de l'eau oxygénée ou un mélange eau oxygénée/acide ascorbique ; et
- des combinaisons de ces voies.

12. Procédé selon l'une quelconque des revendications précédentes, dans lequel l'étape de traitement thermique consiste en une opération de calcination sous atmosphère oxydante.

13. Procédé selon la revendication 12, dans lequel l'opération de calcination sous atmosphère oxydante est suivie d'une opération de traitement thermique additionnel consistant à réduire au moins une partie de la poudre obtenue préalablement en une solution solide comprenant de l'uranium, au moins un actinide mineur et éventuellement du plutonium.

14. Procédé selon l'une quelconque des revendications précédentes, dans lequel l'étape de traitement thermique d) est précédée d'une étape de broyage du xérogel obtenu de sorte à le transformer en poudre.

15. Procédé de préparation d'un combustible compacté comprenant :
e) une étape de mise en œuvre du procédé de préparation tel que défini selon l'une quelconque des revendications 1 à 14;
f) une étape de compactage de ladite poudre obtenue en e).

## Patentansprüche

1. Verfahren zur Herstellung eines Pulvers auf Oxidbasis, das Uran, zumindest ein niedriges Actinoid und gegebenenfalls Plutonium enthält, umfassend die folgenden Schritte:
a) einen Schritt der Zugabe zumindest eines Monomers zu einer wässrigen Lösung, die Nitrationen umfasst und Uran, zumindest ein niedriges Actinoid und gegebenenfalls Plutonium enthält, wobei das bzw. die Monomere zumindest eine ethylenische Gruppe und zumindest eine polare Gruppe, die Wasserstoffbindungen bilden kann, enthalten;
b) einen Schritt der Gewinnung eines Gels, das die wässrige Lösung einfängt, durch Polymerisation des bzw. der in a) zugegebenen Monomere;
c) einen Schritt der Gewinnung eines Xerogels, das Nitrate von Uran, von zumindest einem niedrigen Actinoid und gegebenenfalls von Plutonium enthält, durch Dehydratisierung des in b) gewonnen Gels;
d) einen Schritt der Gewinnung des Pulvers durch Wärmebehandlung des in c) gewonnenen Xerogels.

2. Verfahren nach Anspruch 1, wobei es sich bei der wässrigen Lösung um eine wässrige Lösung handelt, die Uran in seiner Oxidationsstufe VI, zumindest ein niedriges Actinoid in seiner Oxidationsstufe III und gegebenenfalls Plutonium in seiner Oxidationsstufe IV enthält.

3. Verfahren nach Anspruch 1 oder 2, wobei es sich bei der wässrigen Lösung um eine wässrige Lösung handelt, die U^{+VI} in Form von Uranylnitrat UO₂(NO₃)₂, Americium Am^{+III} in Form von Americiumnitrat Am(NO₃)₃ und gegebenenfalls Pu^{+IV} in Form von Plutonium(IV)-Nitrat Pu(NO₃)₄ enthält.

4. Verfahren nach einem der vorhergehenden Ansprüche, wobei das bzw. die in Schritt a) zugegebenen Monomere zumindest eine ethylenische Gruppe und zumindest eine Gruppe mit einem oder mehreren Wasserstoffatomen, die an Atome gebunden sind, die elektronegativer als Wasserstoff sind, wie Stickstoffatome, Sauerstoffatome, enthalten.

5. Verfahren nach einem der vorhergehenden Ansprüche, wobei das bzw. die in Schritt a) zugegebenen Monomere zumindest eine ethylenische Gruppe und zumindest eine Gruppe, ausgewählt aus Amidgruppen, -OH-Gruppen, Carboxylgruppen und/oder Carboxylatgruppen und/oder Estergruppen, enthalten.

6. Verfahren nach einem der vorhergehenden Ansprüche, wobei das bzw. die in Schritt a) zugegebenen Monomere ausgewählt sind aus Acrylmonomeren, Methacrylmonomeren, Acrylatmonomeren, Methacrylatmonomeren, Acrylamidmonomeren, *bis*(Acrylamid)-Monomeren, Epoxidmonomeren und deren Gemischen.

7. Verfahren nach einem der vorhergehenden Ansprüche, wobei die Zugabe in Schritt a) aus einer Zugabe eines Gemischs von Monomeren besteht.

8. Verfahren nach Anspruch 8, wobei das Monomergemisch aus einem Monomer mit einer einzelnen polymerisierbaren Gruppe, beispielsweise einem Acrylmonomer, wie Acrylsäure, und einem Monomer mit zwei polymerisierbaren Gruppen, beispielsweise einem *bis*(Acrylamid)-Monomer, besteht.

9. Verfahren nach einem der vorhergehenden Ansprüche, wobei der wässrigen Lösung zumindest ein Komplexbildner für in der Lösung vorhandenes Uran und/oder vorhandene niedrige Actinoide und gegebenenfalls vorhandenes Plutonium zugegeben wird, wobei der bzw. die Komplexbildner von dem bzw. den Monomeren aus Schritt a) verschieden sind.

10. Verfahren nach Anspruch 9, wobei der bzw. die Komplexbildner ausgewählt sind aus Verbindungen mit zumindest einer Carboxylgruppe, Verbindungen mit zumindest einer Aminogruppe, und Verbindungen mit zumindest einer Aminogruppe und zumindest einer Carboxylgruppe.

11. Verfahren nach einem der vorhergehenden Ansprüche, wobei die Polymerisation in Schritt b) auf folgende Wege hervorgerufen wird:
- einem thermischen Weg, der darin besteht, die Lösung zu erhitzen, um die Polymerisation und damit die Gelierung einzuleiten;
- einem Weg, der darin besteht, die Lösung einer UV-Bestrahlung zu unterziehen, um ebenfalls die Polymerisation einzuleiten;
- einem Weg, der darin besteht, die Lösung einer γ-Strahlung zu unterziehen, um ebenfalls die Polymerisation einzuleiten;
- einem Weg, der darin besteht, der Lösung einen Polymerisationsinitiator, wie beispielsweise Wasserstoffperoxid oder ein Wasserstoffperoxid/Ascorbinsäure-Gemisch, zuzugeben; und
- Kombinationen aus diesen Wegen.

12. Verfahren nach einem der vorhergehenden Ansprüche, wobei der Schritt der Wärmebehandlung aus einem Kalzinierungsvorgang unter oxidierender Atmosphäre besteht.

13. Verfahren nach Anspruch 12, wobei auf den Kalzinierungsvorgang unter oxidierender Atmosphäre ein zusätzlicher Wärmebehandlungsvorgang folgt, der darin besteht, zumindest einen Teil des zuvor gewonnenen Pulvers zu einer festen Lösung zu reduzieren, die Uran, zumindest ein niedriges Actinoid und gegebenenfalls Plutonium enthält.

14. Verfahren nach einem der vorhergehenden Ansprüche, wobei dem Schritt d) der Wärmebehandlung ein Schritt des Mahlens von gewonnenem Xerogel vorausgeht, um es zu Pulver zu verarbeiten.

15. Verfahren zur Herstellung eines verdichteten Brennstoffs, umfassend:
e) einen Schritt der Durchführung des Herstellungsverfahrens nach einem der Ansprüche 1 bis 14;
f) einen Schritt des Verdichtens des in e) gewonnenen Pulvers.

## Claims

1. A method for preparing a powder based on oxide(s) comprising uranium, at least one minor actinide and possibly plutonium comprising the following steps:
a) a step of adding at least one monomer to an aqueous solution comprising nitrates ions and comprising uranium, at least one minor actinide and possibly plutonium, the monomer(s) comprising at least one ethylenic group and at least one polar group able to form hydrogen bonds;
b) a step of obtaining a gel trapping said aqueous solution by polymerising the monomer(s) added in a);
c) a step of obtaining a xerogel comprising uranium, at least one minor actinide and possibly plutonium nitrates by dehydrating the gel obtained in b);
d) a step of obtaining said powder by thermally treating the xerogel obtained in c).

2. The method according to claim 1, wherein the aqueous solution is an aqueous solution comprising uranium at its oxidation state VI, at least one minor actinide at its oxidation state III and possibly plutonium at its oxidation state IV.

3. The method according to claim 1 or 2, wherein the aqueous solution is an aqueous solution comprising U^{+VI} as uranyl nitrate UO₂(NO₃)₂, americium Am^{+III} as americium nitrate Am(NO₃)₃ and possibly Pu^{+IV} as plutonium (IV) nitrate Pu(NO₃)₄.

4. The method according to any of the preceding claims, wherein the monomer(s) added during step a), comprise(s) at least one ethylenic group and at least one group including one or several hydrogen atoms bonded to more electronegative atoms than hydrogen, such as nitrogen atoms, oxygen atoms.

5. The method according to any of the preceding claims, wherein the monomer(s) added during step a) comprise(s) at least one ethylenic group and at least one group selected from amide groups, -OH groups, carboxylic groups, carboxylate groups and/or ester groups.

6. The method according to any of the preceding claims, wherein the monomer(s) added during step a) is (are) selected from acrylic monomers, methacrylic monomers, acrylate monomers, methacrylate monomers, acrylamide monomers, bis(acrylamide) monomers, epoxyde monomers and mixtures thereof.

7. The method according to any of the preceding claims, wherein adding in step a) consists in adding a mixture of monomers.

8. The method according to claim 8, wherein the mixture of monomers consists of a monomer comprising only one polymerisable group, for example, an acrylic monomer, such as acrylic acid and a monomer comprising two polymerisable groups, for example a *bis*(acrylamide) monomer.

9. The method according to any of the preceding claims, wherein at least one complexing agent of uranium and/or minor actinide(s) and possibly plutonium present in said solution is added to the aqueous solution, said complexing agent(s) being distinct from the monomer(s) of step a).

10. The method according to claim 9, wherein the complexing agent(s) is (are) selected from compounds comprising at least one carboxylic group, compounds comprising at least one amine group, compounds comprising at least one amine group and at least one carboxylic group.

11. The method according to any of the preceding claims, wherein polymerising of the step b) is caused by the following pathways:
- a thermal pathway consisting in heating the solution to trigger polymerisation and, as a consequence, gelling;
- a pathway consisting in subjecting the solution to UV radiation also to trigger polymerisation;
- a pathway consisting in subjecting the solution to γ radiation also to trigger polymerisation;
- a pathway consisting in adding to the solution a polymerisation initiator such as, for example, hydrogen peroxide or a hydrogen peroxide/ascorbic acid mixture; and
- combinations of these pathways.

12. The method according to any of the preceding claims, wherein the thermal treatment step consists of a calcination operation under oxidising atmosphere.

13. The method according to claim 12, wherein the calcination operation under oxidising atmosphere is followed by an additional thermal treatment operation consisting in reducing at least part of the powder previously obtained into a solid solution comprising uranium, at least one minor actinide and possibly plutonium.

14. The method according to any of the preceding claims, wherein the thermal treatment step d) is preceded by a step of grinding the xerogel obtained so as to transform it into powder.

15. A method for preparing a compacted fuel comprising:
e) a step of implementing the preparation method such as defined according to any of claims 1 to 14;
f) a step of compacting said powder obtained in e).
